Europäisches Patentamt

European Patent Office

Office européen des brevets

(19)

(11) Publication number: **0 147 164**

**A2**

(12)

# EUROPEAN PATENT APPLICATION

(21) Application number: 84308879.0

(22) Date of filing: 19.12.84

(51) Int. Cl.⁴: **B 65 D 88/54**
**B 65 G 69/16**

(30) Priority: 22.12.83 GB 8334162

(43) Date of publication of application:
03.07.85 Bulletin 85/27

(84) Designated Contracting States:
BE DE FR IT NL

(71) Applicant: G.O. RULE & SON LIMITED
Saxon Street Grimshaw Lane
Middleton Manchester, M24 4AD(GB)

(71) Applicant: TANFINE LIMITED
Harrogate Road Apperley Bridge
Bradford West Yorkshire, BD10 0LR(GB)

(72) Inventor: Halpin, David Robert
19 Woodgate Avenue
Bamford, Rochdale, Lancs.(GB)

(72) Inventor: Dalton, Roy
37 Hillside Drive
Middleton, Manchester(GB)

(74) Representative: Massey, Alexander et al,
MARKS & CLERK Scottish Life House Bridge Street
Manchester, M3 3DP(GB)

(54) **Storage hopper or silo.**

(57) A storage hopper or silo for plastics bottles comprises an upright container hexagonal in plan view and adapted to be supported above ground level. A central column hexagonal in plan view extends the height of the container, and a helically-extending deck or runway of predetermined pitch bridges the container wall and central column. The deck or runway is constituted by a series of butting or overlapping differentially-angled steps defining a descending path for the plastics bottles.

The helical deck or runway may be single or multiple start. The storage hopper is preferably or modular construction with its walls being clipped together and its deck or runway sectioned into steps and clipped into ledges on the walls and central column.

EP 0 147 164 A2

1.

## STORAGE HOPPER OR SILO

This invention relates to a storage hopper or silo especially but not exclusively applicable for the storage of plastics  bottles or containers.

According to the present invention there is provided, in its broadest concept, a storage hopper for articles to be stored for delivery to a working station or other location, the hopper comprising an inlet at or adjacent its top, an outlet at or adjacent its bottom, and, extending between the inlet and outlet, a helically-extending deck or runway inclined at an angle permitting a controlled flow of articles between inlet and outlet.

With certain plastics bottles which have an inherent degree of compressibility it is the practice to print data (such, for example, as Trade Marks, description of contents and instructions to use) directly onto the surface of the bottles and consequently it is necessary to ensure that such bottles reach the printing station in a non-compressed condition since otherwise indentations at the area of printing will result in faulty or incomplete printing with resultant wastage.

In order to avoid such indentation, the pitch of the helical deck or runway of the storage hopper

2.

according to the present invention is selected dependent upon the known degree of inherent compressibility of the plastics bottles concerned.

Such selection ensures that at no time are the plastics bottles stacked on the helically-extending deck or runway to a depth which would result in such indentation.

The angle of descending inclination of the deck or runway may be constant; or it may gradually increase or decrease; or it may be determined by a series of successive differentially-angled steps defining a continuous deck or runway.

The hopper may in plan view be circular, rectangular, or polygonal, i.e. five or more sides.

A particularly suitable configuration has been found to be hexagonal.

More specifically, a storage hopper or silo according to the present invention for plastics bottles comprises an upright container hexagonal in plan view and adapted to be supported above ground level, a central column hexagonal in plan view extending the height of the container, and a helically-extending deck or runway of predetermined pitch bridging the container wall and central column and constituted by a series of butting or overlapping differentially-angled steps defining a descending path for the plastics bottles.

3.

Preferably, the container is open-topped and has a closed bottom with at least one but preferably two outlets therein.

Storage hoppers may be stacked one on top of another and in this instance upper hoppers would not have a closed bottom but would open wholly, i.e. _via_ its helical deck or runway, into a lower hopper.

The helical deck or runway may be single or multiple start.

The storage hopper is preferably of modular construction with its walls being clipped together and its deck or runway sectioned into steps and clipped into ledges on the walls and central column.

The latter is preferably of unitary construction.

The storage hopper is preferably formed of sheet metal but may be formed of "WELDMESH", timber or plastics material or any combination of all of these.

An embodiment of the present invention will now be described, by way of example, with reference to the accompanying drawings, in which :-

Fig. 1 is a diagrammatic vertical section through a plastics bottle storage hopper or silo;

Fig. 2 is a diagrammatic plan view;

Figs. 3 to 5 are inside elevations of three of the walls of the storage hopper;

Fig. 6 is an outside elevation of one of the walls of the storage hopper;

4.

Fig. 7 is a perspective detail view showing the method of securing the walls together;

Fig. 8 is an elevation of the central column or pillar of the storage hopper;

Fig. 9 is a plan view of a deck or runway section;

Fig. 10 is an elevation of vertically stacked storage hoppers;
and

Fig. 11 is a plan view of horizontally stacked storage hoppers.

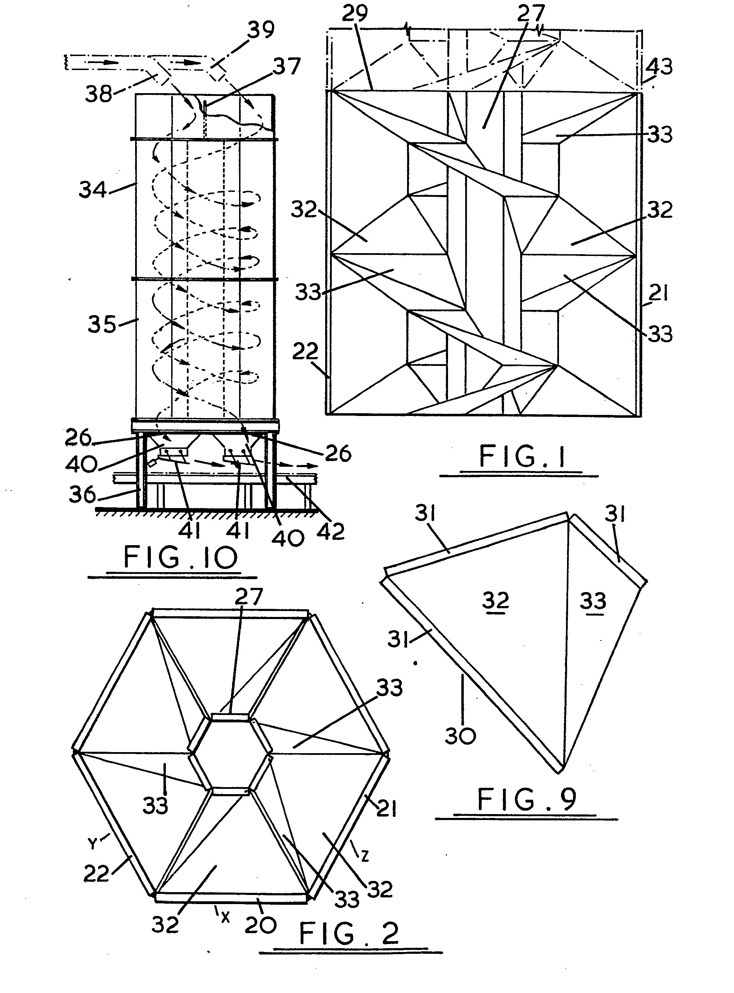

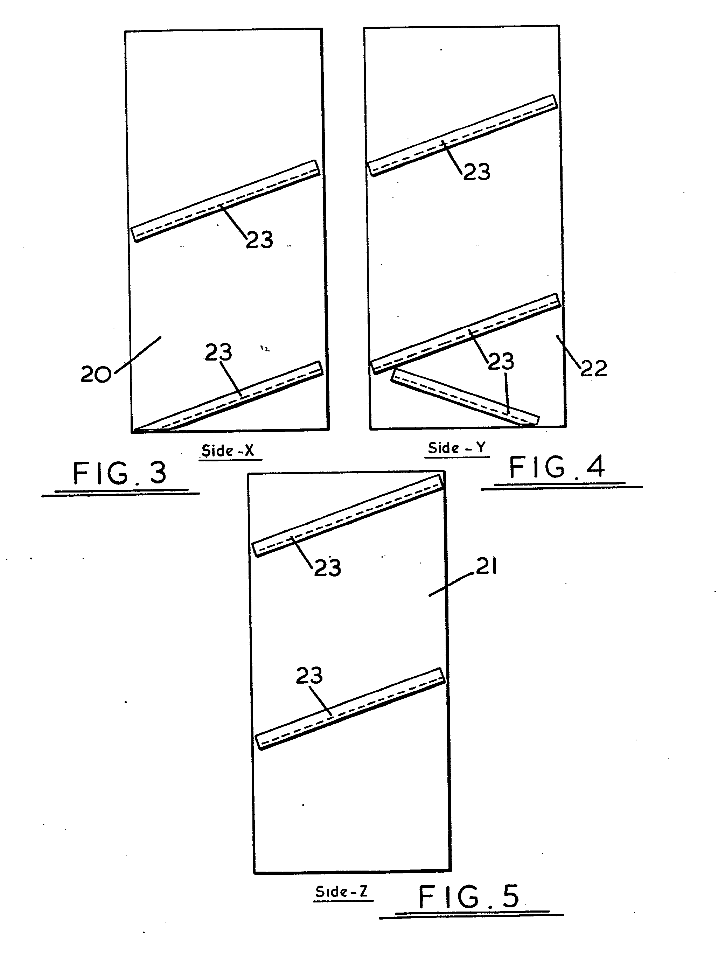

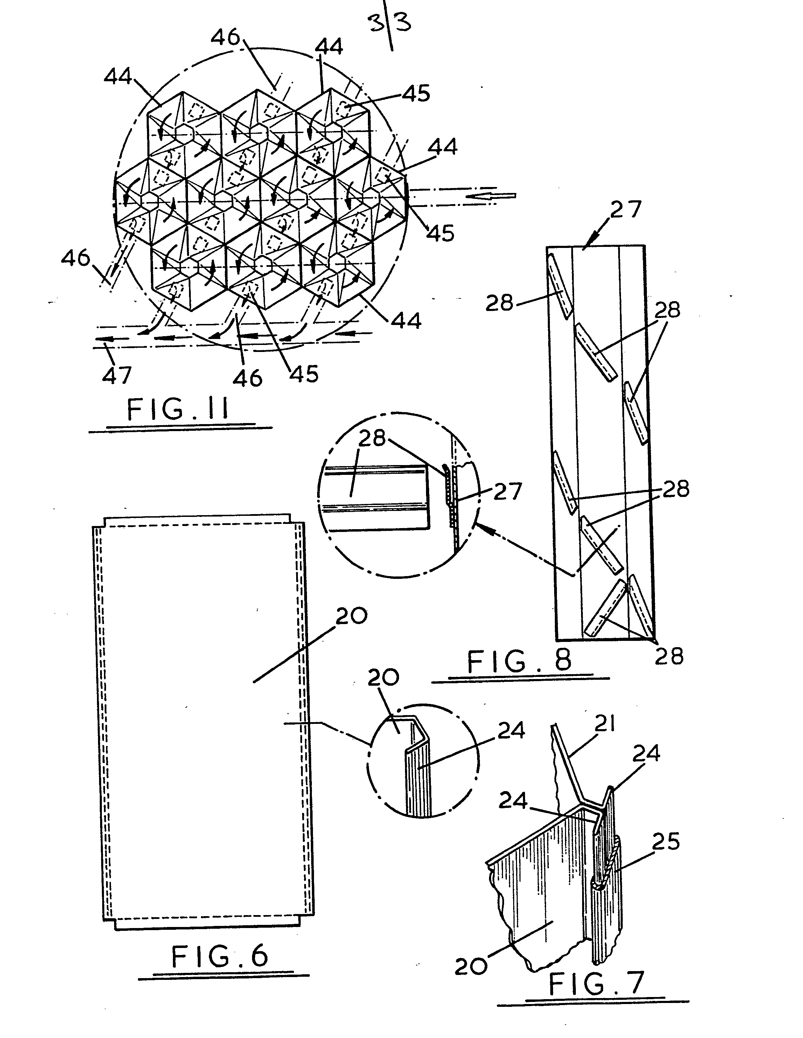

The plastics bottle storage hopper or silo is hexagonal in plan view (see Fig. 2) and is formed of sheet metal. The hopper is made up of six walls, two each of walls 20, 21 and 22. Each wall has provided on its inside surface inclined ledges 23 located as shown in Figs. 3 to 5. These ledges 23 define with the wall surfaces recesses or grooves as can more readily be seen in Fig. 8. They are disposed at an inclination of approximately 30° to the horizontal, and in the assembled six-sided hopper define a substantially helical descending path around the inside of the hopper.

Each wall has each vertical edge formed as a returned bend 24 (see Figs. 6 and 7) and adjacent return bends 24 of adjacent walls, say 20 and 21) are butted together and secured together by a metal clip 25.

5.

which preferably extends the height of the walls.

The hopper is closed at its bottom by a flat floor (not shown) having two diametrically opposed openings 26 (see Fig. 11).

The hopper comprises also a central hexagonal column or pillar 27 of unitary configuration, i.e. its sides are welded together. This central column 27 on each face has ledges 28 similar to ledges 23 but disposed at an angle of approximately 60° to the horizontal and again defining a substantially helical descending path around the column 27.

The pitch of the two helical paths defined respectively by ledges 23 and 28, is, in this example, approximately four feet, that is to say the spacing between vertically spaced ledges on a wall or the same face of the column 27 save at the bottom is approximately four feet.

A helical deck or runway bridges the hopper walls 20, 21 and 22 and the column 27 and extends from the open top 29 of the hopper to the bottom openings 26.

This deck comprises sections 30 (see Fig. 9) which are butted together around the aforesaid helically descending path and has flanges 31 at three sides to engage in ledges 23 and 28.

Each deck section 30 is formed of sheet metal and has a major area 32 which in the assembled hopper is inclined at an angle of approximately 30° and a

6.

minor area 32 inclined at an angle of approximately 60°. It can be seen from Figs. 1 and 2 that each minor area 32 butts the major area 31 of the deck section immediately below it.

In use, plastics bottles are blown into the top 29 of the storage hopper and exit through bottom openings 26. They flow down the helical deck or runway in a layered manner and due to the selected pitch of the helical deck or runway and the known compressibility factor of the plastics bottles no crushing of the stacked bottles within the storage hopper occurs.

It will be manifest that during their descent the plastics bottles tend to descend more rapidly adjacent the column 27, i.e. where the steeper areas 33 are disposed.

Fig. 10 shows two vertically stacked hoppers 34 and 35 supported above ground by a stand 36.

A partition wall 37 is diagrammatically indicated to show that a hopper can be internally subdivided to take plastics bottles of different sizes and/or shapes blown into the compartmentalised hopper 34 by separate feed pipes 38, 39.

The hopper 34 would, of course, have no floor but open directly into hopper 35.

The plastics bottles are fed out of chutes 40 onto shaker tables 41 and thence onto a conveyor.

In Fig. 1, it is shown that an upper extension

7.

wall 43 may be provided, which wall 43 may or may not surround decking, i.e. it may simply define a large capacity receiving space.

Finally, Fig. 11 shows a series of horizontally stacked hoppers 44, their bottom opening being indicated at 45 feeding to branch conveyors 46 delivering to a main conveyor 47.

It is unlikely that there would be more than three starts and the galleries, i.e. the spaces between deck sections, are unlikely to be greater than four feet in height. This vertical dimension or pitch will be determined by the inherent compressibility or crushability of the bottles which itself is determined by the weight and configuration of a bottle and the density of plastics material used in the manufacture of the bottle.

While the storage hopper has been described with a pair of chutes 40 there may be a single central chute only provided.

CLAIMS:

1. A storage hopper for articles to be stored for delivery to a working station or other location, the hopper comprising an inlet at or adjacent its top, an outlet at or adjacent its bottom, and, extending between the inlet and outlet, a helically-extending deck or runway inclined at an angle permitting a controlled descending flow of articles between inlet and outlet.

2. A storage hopper or silo for plastics bottles comprises an upright container adapted to be supported above ground level, a central column extending the height of the container, and a helically-extending deck or runway of predetermined pitch bridging the container wall and central column and constituted by a series of butting or overlapping differentially-angled steps defining a descending path for the plastics bottles.

3. A storage hopper as claimed in claim 1 or 2 in which the descending inclination of the deck or runway is constant.

4. A storage hopper as claimed in claim 1 or 2, in which the descending inclination of the deck or runway gradually increases and decreases.

5. A storage hopper as claimed in any one of claims 2 to 4 in which the container and the central column are hexagonal in plan view.

6. A storage hopper as claimed in any one of claims 2 to 5, in which the container is open-topped and has a closed bottom with at least one outlet therein.

7. A storage hopper as claimed in any one of claims 1 to 6, in which the helical deck or runway is single or multiple start.

8. A storage hopper as claimed in any one of claims 2 to 7 and being of modular construction with its walls being clipped together and its deck or runway sectioned into steps and clipped into ledges on the walls and central column.

FIG.10

FIG.1

FIG.9

FIG.2

23

23

20

23

Side -X

FIG. 3

23

23

22

Side - Y

FIG. 4

23

21

23

Side - Z

FIG. 5

FIG. 11

FIG. 8

FIG. 6

FIG. 7